# EUROPÄISCHE PATENTANMELDUNG

(11) **EP 0 977 418 A2**
(43) Veröffentlichungstag der Anmeldung: **02.02.2000**
(21) Anmeldenummer: 99112880.2
(22) Anmeldetag: 03.07.1999
(51) Int. Cl.: H04N 1/00

(54) **Projektor**

(30) Priorität: 31.07.1998 DE 19834594
(71) Anmelder: Rollei Fototechnic GmbH, 38126 Braunschweig (DE)
(72) Erfinder: Krüger, Roland, 38304 Wolfenbüttel (DE)
(74) Vertreter: Gramm, Werner, Prof. Dipl.-Ing.

(57) **Zusammenfassung**

Die Erfindung betrifft einen Projektor, mit einer bilderzeugenden Einheit (1) und einer diese ansteuernden Einheit (4), die mittels digitaler Daten optische Ablenk- oder Dämpfungssysteme der z.B. als LCD oder DMD ausgebildeten bilderzeugenden Einheit (1) derart steuert, daß diese in einem entsprechenden, eine Lichtquelle (2) und eine abbildende Einheit (3) aufweisenden optischen Strahlengang Bilder erzeugt und projiziert. Als neuer Projektortyp wird erfindungsgemäß vorgeschlagen, daß der Projektor zumindest eine Schnittstelle (11, 12, 13) für den Anschluß eines Massenspeichers, auf dem in digitaler Form über eine Digital Still Camera Bildinformationen abgelegt sind, sowie eine elektronische Daten vorverarbeitende Einheit (10) aufweist, die die vom Massenspeicher und dessen Bildinformationen abhängigen Transformationen durchführt und diese dann dem Projektionsteil (1, 4) des Projektors direkt zuführt.

## Beschreibung

Die Erfindung betrifft einen Projektor, mit einer bilderzeugenden Einheit und einer diese ansteuernden Einheit, die mittels digitaler Daten optische Ablenk- oder Dämpfungssysteme der z.B. als LCD oder DMD ausgebildeten bilderzeugenden Einheit derart steuert, daß diese in einem entsprechenden, eine Lichtquelle und eine abbildende Einheit aufweisenden optischen Strahlengang Bilder erzeugt und projiziert.

Zum Projizieren von Bildern wird im Markt eine Vielzahl von Geräten angeboten. Dabei handelt es sich überwiegend um Geräte, die auf analoger Basis von Filmen oder Diapositiven analoge Bilder projizieren.

Es werden aber auch bereits Geräte angeboten, die mittels digitaler Daten aus einem Datenspeicher optische Ablenk- oder Dämpfungssysteme derart steuern, daß mit diesen Systemen in einem entsprechenden optischen Strahlengang mit entsprechender Beleuchtung Bilder erzeugt und projiziert werden können. Hierzu gehören die LCD-Projektoren sowie die DMD (Digital Mirror Device)-Projektoren. Die Eingangssignale für die zu projizierenden Bildinformationen sind u.a. Video, analoge oder digitale RGB-Informationen. Diese Informationen werden von entsprechenden, an die Projektoren angeschlossenen Geräten erzeugt. Die Bedienung dieser Geräte erfolgt über entsprechende Panels, Mausanschluß und/oder Menuesteuerung.

Der Markt bietet auch Photoapparate an, die die Bildinformationen in digitaler Form auf verschiedene Massenspeicher ablegen. Verfügbare, wechselbare Massenspeicher sind die Flashcard, Compact Flash Card, PCMCIA-Harddisk und die Smard Media Card (SSFDC). Der Benutzer, der sein mit einer derartigen Digital Still Camera gemachtes Bild projizieren will, muß dieses von dem benutzten Massenspeicher in einen PC einlesen, wo es auf verschiedene Art und Weise bearbeitet wird. Der PC muß dann an einen Projektor der vorstehend beschriebenen Bauart angeschlossen werden, um die Bildinformationen auf eine Bildfläche projizieren zu können.

Der Erfindung liegt die Aufgabe zugrunde, die Projizierung von auf einen Massenspeicher abgelegten Bildinformationen zu erleichtern.

Diese Aufgabe wird erfindungsgemäß dadurch gelöst, daß der Projektor zumindest eine Schnittstelle für den Anschluß eines Massenspeichers, auf dem in digitaler Form über eine Digital Still Camera Bildinformationen abgelegt sind, sowie eine elektronische Daten vorverarbeitende Einheit aufweist, die die vom Massenspeicher und dessen Bildinformationen abhängigen Transformationen durchführt und diese dann dem Projektionsteil des Projektors direkt zuführt.

Mit einem erfindungsgemäßen Projektor ist es somit möglich, ohne Zwischenschaltung eines PCs die Bilder aus den verschiedenen am Markt verfügbaren Massenspeichern auszulesen und zu projizieren. Dabei dient die die Daten vorverarbeitende, in dem Projektor integrierte Einheit zur Steuerung und Anpassung, Dekomprimierung, Einstellung von Helligkeit und Kontrast, ggf. zur Überblendsteuerung und zur Manipulation der Farben und des Gamma. Erfindungsgemäß können in dem Projektor mehrere Schnittstellen für den Anschluß verschiedener Massenspeicher integriert sein, wie z.B. Flashcard, Compact Flash Card, PCMCIA-Harddisk und Smard Media Card (SSFDC).

Ist hingegen nur eine Schnittstelle für einen bestimmten Massenspeicher vorgesehen, ist es zweckmäßig, wenn für diese eine Schnittstelle ein Adapter vorgesehen ist, der zur Aufnahme eines eine andere Schnittstelle erfordernden Massenspeichers ausgelegt ist.

Weitere Merkmale der Erfindung sind Gegenstand der Unteransprüche und werden in Verbindung mit weiteren Vorteilen der Erfindung anhand eines Ausführungsbeispieles beschrieben.

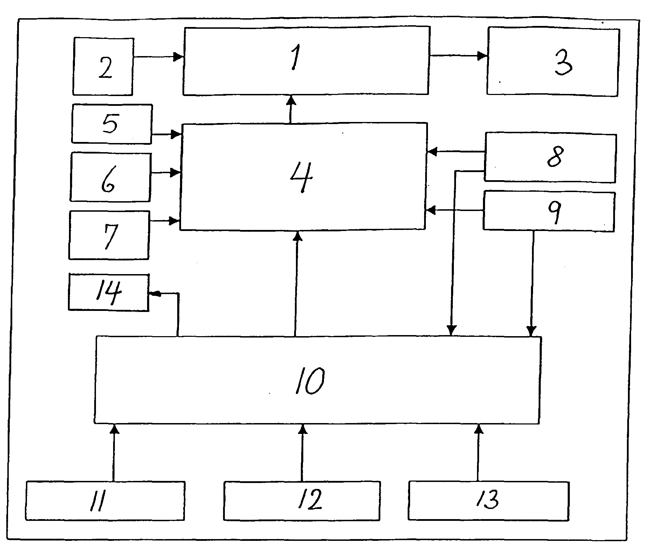

Die Zeichnung zeigt eine Blockdarstellung eines Projektors, der Bilddaten direkt projiziert.

Der Projektor umfaßt eine bilderzeugende Einheit 1, die das LCD- oder DMD-Arbeitsprinzip aufweist. Angeschlossen an diese bilderzeugende Einheit ist eine Lichtquelle 2 und eine in den optischen Strahlengang geschaltete abbildende Einheit 3, die eine Optik, Blende und dergleichen umfaßt.

Die bilderzeugende Einheit 1 wird von einer Ansteuernden Einheit 4 angesteuert, die mittels digitaler Daten optische Ablenk- oder Dämpfungssysteme der bilderzeugenden Einheit 1 derart steuert, daß diese in einem entsprechenden Strahlengang Bilder erzeugt und projiziert. Die Ansteuernde Einheit 4 weist für die von an den Projektor anschließbaren Geräten erzeugten Eingangssignale für die zu projizierenden Bildinformationen einen Video-Eingang 5 sowie einen Eingang 6 für analoge und einen Eingang 7 für digitale RGB-Informationen auf. Für die Bedienung dieser Geräte weist die Ansteuernde Einheit 4 einen Anschluß 8 für ein Bedien panel und einen Anschluß 9 für die Bedienung über eine Maus auf.

Integriert in den Projektor sind bei dem gezeigten Ausführungsbeispiel drei Schnittstellen 11, 12, 13, die Anschlüsse für Massenspeicher verschiedenen Typs darstellen, auf denen in digitaler Form über eine Digital Still Camera Bildinformationen abgelegt wurden. Diesen Schnittstellen 11, 12, 13 nachgeschaltet ist eine elektronische Daten vorverarbeitende Einheit 10, die die vom Massenspeicher und dessen Bildinformationen abhängigen Transformationen (z.B. Steuerung und Anpassung, Dekomprimierung, Überblendsteuerung und dergl.) durchführt und diese dann dem Projektionsteil des Projektors über die Ansteuernde Einheit 4 zuführt.

Als Alternative ist an der vorverarbeitenden Einheit 10 noch ein Video-Ausgang 14 vorgesehen.

## Patentansprüche

1. Projektor, mit einer bilderzeugenden Einheit (1) und einer diese ansteuernden Einheit (4), die mittels digitaler Daten optische Ablenk- oder Dämpfungssysteme der z.B. als LCD oder DMD ausgebildeten bilderzeugenden Einheit (1) derart steuert, daß diese in einem entsprechenden, eine Lichtquelle (2) und eine abbildende Einheit (3) aufweisenden optischen Strahlengang Bilder erzeugt und projiziert, **dadurch gekennzeichnet,** daß der Projektor zumindest eine Schnittstelle (11, 12, 13) für den Anschluß eines Massenspeichers, auf dem in digitaler Form über eine Digital Still Camera Bildinformationen abgelegt sind, sowie eine elektronische Daten vorverarbeitende Einheit (10) aufweist, die die vom Massenspeicher und dessen Bildinformationen abhängigen Transformationen durchführt und diese dann dem Projektionsteil (1, 4) des Projektors direkt zuführt.

2. Projektor nach Anspruch 1, **gekennzeichnet durch** mehrere Schnittstellen (11, 12, 13) für den Anschluß verschiedener Massenspeicher wie z.B. Flashcard, Compact Flash Card, PCMCIA-Harddisk und Smard Media Card (SSFDC).

3. Projektor nach Anspruch 1 oder 2, **dadurch gekennzeichnet,** daß die Ansteuernde Einheit (4) für die von an den Projektor anschließbaren Geräten erzeugten Eingangssignale für die zu projizierenden Bildinformationen einen Video-Eingang (5) sowie einen Eingang (6) für analoge und einen Eingang (7) für digitale RGB-Informationen aufweist.

4. Projektor nach Anspruch 3, **dadurch gekennzeichnet**, daß für die Bedienung der genannten Geräte die Ansteuerbare Einheit (4) Anschlüsse (8, 9) für Panels, eine Maus und/oder eine Menuesteuerung aufweist.

5. Projektor nach einem der vorhergehenden Ansprüche, **gekennzeichnet** durch einen für die zumindest eine Schnittstelle (11, 12, 13) vorgesehenen Adapter zur Aufnahme eines eine andere Schnittstelle erfordernden Massespeichers.

6. Projektor nach einem der vorhergehenden Ansprüche, **gekennzeichnet** durch einen Video-Ausgang (14) der projizierten Bilder.
